# EUROPEAN PATENT APPLICATION

(11) **EP 4 507 228 A1**
(43) Date of publication of application: **12.02.2025**
(21) Application number: 23778520.9
(22) Date of filing: 31.03.2023
(51) Int. Cl.: H04L 5/00

(54) **DMRS PORT INFORMATION INDICATION METHOD, TERMINAL AND NETWORK SIDE DEVICE**

(30) Priority: 02.04.2022 CN 202210346936; 11.07.2022 CN 202210809489
(71) Applicant: Vivo Mobile Communication Co., Ltd., Dongguan, Guangdong 523863 (CN)
(72) Inventor: ZHENG, Kaili, Dongguan, Guangdong 523863 (CN); SUN, Peng, Dongguan, Guangdong 523863 (CN); LIU, Hao, Dongguan, Guangdong 523863 (CN); TAMRAKAR, Rakesh, Dongguan, Guangdong 523863 (CN)
(74) Representative: Murgitroyd & Company
(86) International application number: PCT/CN2023/085792
(87) International publication number: WO 2023/186156

(57) **Abstract**

The embodiments of this application disclose a DMRS port information indication method, a terminal, and a network-side device, which belong to the field of communications technologies. The DMRS port information indication method of the embodiments of this application includes: receiving, by a terminal, target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer; and sending, by the terminal, data or receiving data according to the information of the DMRS port.

## Description

### CROSS-REFERENCE TO RELATED APPLICATIONS

The present invention claims priority to Chinese Patent Application No. 202210346936.4, filed with the China National Intellectual Property Administration on April 2, 2022, and entitled "DMRS PORT INFORMATION INDICATION METHOD, TERMINAL, AND NETWORK-SIDE DEVICE", and Chinese Patent Application No. 202210809489.1, filed with the China National Intellectual Property Administration on July 11, 2022, and entitled "DMRS PORT INFORMATION INDICATION METHOD, TERMINAL, AND NETWORK-SIDE DEVICE", which are incorporated herein by reference in their entireties.

### TECHNICAL FIELD

This application belongs to the field of communication technologies, and specifically relates to a demodulation reference signal (Demodulation Reference Signal, DMRS) port information indication method, a terminal, and a network-side device.

### BACKGROUND

To further increase a number of users and a number of simultaneously transmitted data streams in multi user multiple-input-multiple-output (Multi User MIMO, MU-MIMO), a number of DMRS ports of a data channel in a new radio (New Radio, NR) system can be further increased. Then, when a new DMRS port is introduced, how to indicate and distinguish an existing DMRS port and the new DMRS port is a key issue. Therefore, a DMRS port indication method needs to be optimized.

### SUMMARY

Embodiments of this application provide a DMRS port information indication method, a terminal, and a network-side device, which can solve a problem in related technologies that DMRS ports of different types cannot be indicated and distinguished and consequently terminal communication is affected.

According to a first aspect, a DMRS port information indication method is provided, including: receiving, by a terminal, target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer; and sending, by the terminal, data or receiving data according to the information of the DMRS port.

According to a second aspect, a DMRS port information indication method is provided, including: sending, by a network-side device, target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer.

According to a third aspect, a DMRS port information indication apparatus is provided, including: a communications module, configured to receive target indication information; the target indication information is used to indicate a target value item of X value items in a target indication table, the target value item corresponds to information of a DMRS port used by the apparatus, the DMRS port used by the apparatus includes a first-type port and/or a second-type port, and X is a positive integer; where the communications module is further configured to send data or receive data according to the information of the DMRS port.

According to a fourth aspect, a DMRS port information indication apparatus is provided, including: a communications module, configured to send target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer.

According to a fifth aspect, a terminal is provided, including a processor and a memory, where the memory stores a program or an instruction executable on the processor, and when the program or instruction is executed by the processor, steps of the method according to the first aspect are implemented.

According to a sixth aspect, a terminal is provided, including a processor and a communications interface, where the communications interface is configured to receive target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer; and send data or receive data according to the information of the DMRS port.

According to a seventh aspect, a network-side device is provided, including a processor and a memory, where the memory stores a program or an instruction executable on the processor, and when the program or instruction is executed by the processor, steps of the method according to the second aspect are implemented.

According to an eighth aspect, a network-side device is provided, including a processor and a communications interface, where the communications interface is configured to send target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer.

According to a ninth aspect, a DMRS port information indication system is provided, including: a terminal and a network-side device, where the terminal may be configured to perform steps of the method according to the first aspect, and the network-side device may be configured to perform steps of the method according to the second aspect.

According to a tenth aspect, a readable storage medium is provided, where the readable storage medium stores a program or an instruction, and when the program or instruction is executed by a processor, steps of the method according to the first aspect or the second aspect are implemented.

According to an eleventh aspect, a chip is provided, including a processor and a communications interface, where the communications interface is coupled to the processor, and the processor is configured to run a program or an instruction to implement steps of the method according to the first aspect or the second aspect.

According to a twelfth aspect, a computer program/program product is provided, stored in a storage medium and executed by at least one processor to implement steps of the method according to the first aspect or the second aspect.

In the embodiments of this application, the target value item of the X value items in the target indication table is indicated, so that the first-type port and/or the second-type port can be indicated. In this way, the first-type port and the second-type port can be indicated and distinguished, and this helps increase a number of DMRS ports, increase a number of MU-MIMO users and a number of simultaneously transmitted data streams, and improve the performance of a communication system.

### BRIEF DESCRIPTION OF THE DRAWINGS

FIG. 1 is a schematic diagram of a wireless communications system according to an embodiment of this application;
FIG. 2 is a schematic flowchart of a DMRS port information indication method according to an embodiment of this application;
FIG. 3 is a schematic diagram of a first-type port and a second-type port according to an embodiment of this application;
FIG. 4 is a schematic flowchart of a DMRS port information indication method according to an embodiment of this application;
FIG. 5 is a schematic structural diagram of a DMRS port information indication apparatus according to an embodiment of this application;
FIG. 6 is a schematic structural diagram of a DMRS port information indication apparatus according to an embodiment of this application;
FIG. 7 is a schematic structural diagram of a communications device according to an embodiment of this application;
FIG. 8 is a schematic structural diagram of a terminal according to an embodiment of this application; and
FIG. 9 is a schematic structural diagram of a network-side device according to an embodiment of this application.

### DETAILED DESCRIPTION

The following clearly describes the technical solutions in the embodiments of this application with reference to the accompanying drawings in the embodiments of this application. Obviously, the described embodiments are some but not all of the embodiments of this application. All other embodiments obtained by persons of ordinary skill in the art based on the embodiments of this application shall fall within the scope of protection of this application.

In the specification and claims of this application, the terms such as "first" and "second" are used for distinguishing similar objects, and are not necessarily used to describe a particular order or sequence. It is to be understood that the terms so used are interchangeable under appropriate circumstances such that the embodiments of this application may be implemented in sequences other than those illustrated or described herein, and "first" and "second" generally distinguish objects of a same type, and the number of objects is not limited. For example, there may be one or more first objects. In addition, in the specification and claims, "and/or" means at least one of connected objects, and the character "/" generally means that associated objects are in an "or" relationship.

It should be noted that the technology described in the embodiments of this application is not limited to a long term evolution (Long Term Evolution, LTE)/LTE-advanced (LTE-Advanced, LTE-A) system, and may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of this application are often used interchangeably, and the described technology may be used not only for the systems and radio technologies mentioned above, but also for other systems and radio technologies. A new radio (New Radio, NR) system is described in the following description for illustrative purposes, and the NR terminology is used in most of the following description, although these technologies may also be applied to applications other than the NR system application, such as the 6^{th} generation (6^{th} Generation, 6G) communications system.

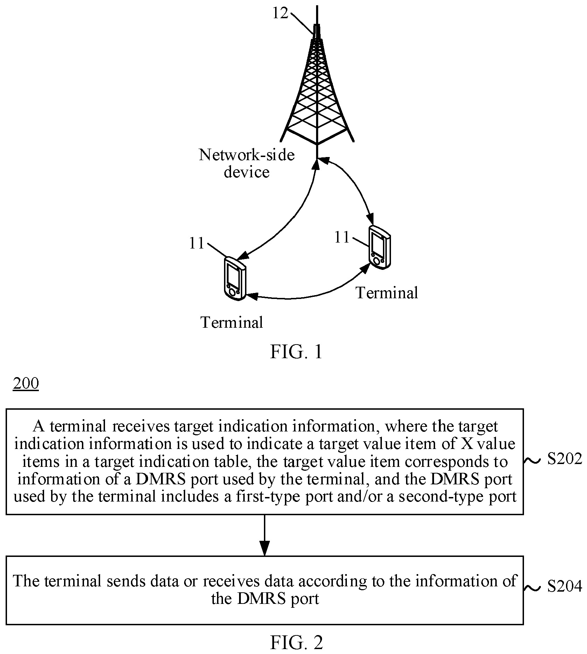

FIG. 1 is a block diagram of a wireless communications system to which an embodiment of this application is applicable. The wireless communications system includes a terminal 11 and a network-side device 12. The terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (Vehicle User Equipment, VUE), a pedestrian terminal (Pedestrian User Equipment, PUE), a smart home appliance (home equipment with a wireless communication function, such as a refrigerator, a TV, a washing machine or a furniture), and terminal side equipment such as a game console, a personal computer (Personal Computer, PC), an ATM or a self-service machine. The wearable device includes: smart watches, smart bracelets, smart headphones, smart glasses, smart jewelry (smart bracelets, smart rings, smart necklaces, smart anklets, or the like), smart wristbands, smart clothing, or the like. It should be noted that the specific type of the terminal 11 is not limited in the embodiments of this application. The network-side device 12 may include an access network device or a core network device, where the access network device may also be referred to as a radio access network device, a radio access network (Radio Access Network, RAN), a radio access network function or a radio access network unit. The access network device may include a base station, a wireless local area network (Wireless Local Area Networks, WLAN) access point, a wireless fidelity (Wireless Fidelity, WiFi) node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the art. As long as a same technical effect is achieved, the base station is not limited to a specified technical term. It should be noted that, in embodiments of this application, only a base station in the NR system is used as an example, but a specific type of the base station is not limited.

The DMRS port information indication method provided by the embodiments of this application will be described in detail below through some embodiments and application scenarios with reference to the accompanying drawings.

As shown in FIG. 2, an embodiment of this application provides a DMRS port information indication method 200, which may be executed by a terminal. In other words, the method may be executed by software or hardware installed in the terminal, and the method includes the following steps.

S202: A terminal receives target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer.

The first-type port may be a DMRS port used by NR. In a case of a DMRS configuration type 1, the first-type port is a port (port) 0 to a port 7. In a case of a DMRS configuration type 2, the first-type port is a port 0 to a port 11, and the second-type port may be a DMRS port different from the first-type port.

Optionally, the first-type port and the second-type port satisfy at least one of the following (1) to (4).
(1) A port index of the second-type port is greater than or equal to a port index of the first-type port. For example, when a DMRS configuration type is related to the DMRS configuration type 1 (configuration type 1), the first-type port includes a total of 8 DMRS ports from the port 0 to the port 7, and the second-type port includes a total of 8 DMRS ports from a port 8 to a port 15. When a DMRS configuration type is related to the DMRS configuration type 2 (configuration type 2), the first-type port includes a total of 12 DMRS ports from the port 0 to the port 11, and the second-type port includes a total of 12 DMRS ports from a port 12 to a port 23, or the like.
   Both the DMRS configuration type 1 and the DMRS configuration type 2 support single-symbol and dual-symbol structures. A maximum number of ports supported by the single-symbol structure of the DMRS configuration type 1 is different from a maximum number of ports supported by the single-symbol structure of the DMRS configuration type 2. A maximum number of ports supported by the dual-symbol structure of the DMRS configuration type 1 is also different from a maximum number of ports supported by the dual-symbol structure of the DMRS configuration type 2. In addition, a number of code division multiplexing (Code Division Multiplexing, CDM) groups (that is, CDM group) supported by the DMRS configuration type 1 is also different from a number of CDM groups supported by the DMRS configuration type 2.
(2) The second-type port and the first-type port belong to different code division multiplexing (Code Division Multiplexing, CDM) groups (that is, CDM group).
(3) The second-type port and the first-type port correspond to different frequency division-orthogonal cover code (Frequency Division-Orthogonal Cover Code, FD-OCC) sequences, and the FD-OCC sequence is used for orthogonalization and channel estimation of a DMRS port in a same CDM group.
(4) The second-type port and the first-type port correspond to different time division-orthogonal cover code (Time Division-Orthogonal Cover Code, TD-OCC) sequences, and the TD-OCC sequence is used for orthogonalization and channel estimation of a DMRS port in a same CDM group.

The target indication table may be referred to as a DMRS port indication table, and includes X value items. Each value item may correspond to an index of the first-type port and/or the second-type port. For example, value items 0 to 5 correspond to indexes of the first-type port, value items 6 to 11 correspond to indexes of the second-type port, and value items 12 to 17 correspond to indexes of the first-type port and the second-type port. Certainly, each value item in the target indication table may also correspond to other contents, for example, correspond to a number of DMRS CDM groups without data and a number of prefix symbols.

In this embodiment, the target indication information may be used to indicate one of the X value items in the target indication table. Based on the value item, the terminal may determine information of a DMRS port corresponding to the value item.

S204: The terminal sends data or receives data according to the information of the DMRS port.

In this step, the terminal may send a physical uplink shared channel (Physical Uplink Shared Channel, PUSCH) according to the information of the DMRS port. Alternatively, the terminal may also receive a physical downlink shared channel (Physical Downlink Shared Channel, PDSCH) according to the information of the DMRS port.

In the DMRS port information indication method provided by this embodiment of this application, the terminal receives the target indication information, where the target indication information is used to indicate a target value item of the X value items in the target indication table, the target value item corresponds to information of a DMRS port used by the terminal, and the DMRS port used by the terminal includes a first-type port and/or a second-type port; and the terminal sends data or receives data according to the information of the DMRS port. In this embodiment of this application, the target value item of the X value items in the target indication table is indicated, so that the first-type port and/or the second-type port may be indicated. In this way, the first-type port and the second-type port may be indicated and distinguished, and this helps increase a number of DMRS ports, increase a number of MU-MIMO users and a number of simultaneously transmitted data streams, and improve the performance of a communication system.

Optionally, the target indication table in embodiment 200 includes one of the following.
(1) A first indication table, where X value items in the first indication table correspond to information of the first-type port.
(2) A second indication table, where N of X value items in the second indication table correspond to information of the second-type port, X-N value items correspond to information of the first-type port and the second-type port, and N is a positive integer and N is less than X.
   Optionally, DMRS ports included in the second indication table are all subject to channel estimation based on an FD-OCC sequence with a length as 4 as a despreading hypothesis.
(3) A third indication table, where M of X value items in the third indication table correspond to information of the first-type port, P value items correspond to information of the second-type port, X-M-P value items correspond to information of the first-type port and the second-type port, M and P are positive integers, and X is greater than a sum of M and P.

In an example, the third indication table may add a column of despreading hypothesis identifiers, that is, the despreading hypothesis identifiers are used to distinguish whether the first-type port included in the third indication table is subject to channel estimation based on an FD-OCC sequence with a length as 4 as a despreading hypothesis or based on an FD-OCC sequence with a length as 2 as a despreading hypothesis. The second-type port included in the third indication table is subject to channel estimation based on an FD-OCC sequence with a length as 4 as a despreading hypothesis by default.

In another example, the third indication table does not include the despreading hypothesis identifier, and signaling is used to distinguish whether the first-type port included in the third indication table is subject to channel estimation based on an FD-OCC sequence with a length as 2 as a despreading hypothesis or based on an FD-OCC sequence with a length as 4 as a despreading hypothesis. The second-type port included in the third indication table is subject to channel estimation based on an FD-OCC sequence with a length as 4 as a despreading hypothesis by default.

In another example, the third indication table does not include the despreading hypothesis identifier, and instead includes the first-type port subject to channel estimation based on an FD-OCC sequence with a length as 2 as a despreading hypothesis, the first-type port subject to channel estimation based on an FD-OCC sequence with a length as 4 as a despreading hypothesis, and the second-type port subject to channel estimation based on an FD-OCC sequence with a length as 4 as a despreading hypothesis.

(4) A fourth indication table, where X value items in the fourth indication table correspond to information of the first-type port and the second-type port.

The fourth indication table is applicable to a case in which the DMRS configuration type is related to the DMRS configuration type 1, a DMRS has a single-symbol structure, and data transmission corresponding to the DMRS uses dual codewords.

Optionally, the method provided in embodiment 200 further includes: receiving, by the terminal, first configuration information, where the first configuration information is used to indicate the target indication table used by the terminal, or to instruct the terminal to switch the target indication table. The first configuration information may be a radio resource control (Radio Resource Control, RRC) signaling message.

Optionally, the switching the target indication table includes one of the following:
(1) switching between the first indication table and the second indication table;
(2) switching between the first indication table and the third indication table; and
(3) switching between the first indication table and the fourth indication table.

Optionally, the method further includes: reporting, by the terminal, first capability information, where the first capability information is used to indicate whether the terminal supports the second-type port.

It can be understood that, in a case that the terminal does not support the second-type port, the terminal only supports being configured with the first indication table; and in a case that the terminal supports the second-type port, the terminal supports being configured with at least one of the following: the first indication table, the second indication table, the third indication table, and the fourth indication table.

In this embodiment of this application, the second-type port is provided and it is considered whether the terminal supports the second port, so that the method of this embodiment of this application may be used by appropriate terminals and improve communication effectiveness.

Optionally, the method provided in the foregoing embodiments further includes: determining, by the terminal based on one of the following, a despreading hypothesis corresponding to channel estimation of the DMRS port.
(1) First configuration information, where the first configuration information is used to indicate the target indication table used by the terminal, or to instruct the terminal to switch the target indication table, and there is a correspondence between the first configuration information and the despreading hypothesis. The first configuration information may be an RRC signaling message. For example, the first configuration information indicates the target indication table used by the terminal. The target indication table corresponds to the first despreading hypothesis or the second despreading hypothesis by default.
(2) Second configuration information, where the second configuration information includes a scrambling code identifier (Identifier, ID) of a DMRS, and there is a correspondence between the scrambling code ID and the despreading hypothesis, for example, a scrambling code ID 0 corresponds to the first despreading hypothesis, and a scrambling code ID 1 corresponds to the second despreading hypothesis.
(3) Third configuration information, where there is a correspondence between the third configuration information and the despreading hypothesis. The third configuration information may be an RRC signaling message, for example, indicates whether the despreading hypothesis of the terminal is the first despreading hypothesis or the second despreading hypothesis.
(4) Despreading indication information, where the despreading indication information includes information corresponding to a specific indication field in downlink control information (Downlink Control Information, DCI), and there is a correspondence between the information corresponding to the specific indication field and the despreading hypothesis. For example, the specific indication field being 0 corresponds to the first despreading hypothesis; and the specific indication field being 1 corresponds to the second despreading hypothesis.
(5) A value corresponding to a value item in the target indication table, where there is a correspondence (or referred to as association) between a value corresponding to the target value item and the despreading hypothesis. For example, when the value corresponding to the value item is less than or equal to A, it corresponds to the first despreading hypothesis; and when the value corresponding to the value item is greater than or equal to A, it corresponds to the second despreading hypothesis, where A is a positive integer.
(6) Information of the DMRS port corresponding to a value item in the target indication table, where there is a correspondence between the information of the DMRS port and the despreading hypothesis.
   For example, if the value item corresponds to information of the first-type port and the second-type port, the despreading hypothesis corresponding to the first-type port is the second despreading hypothesis.
(7) A despreading hypothesis identifier in the target indication table, where there is a correspondence between the despreading hypothesis identifier and the despreading hypothesis. For example, a new column of despreading hypothesis identifiers is added to the target indication table to indicate the despreading hypothesis corresponding to the DMRS port. For example, the despreading hypothesis identifier corresponds to the first despreading hypothesis or the second despreading hypothesis.
(8) Time domain resource allocation information, where the time domain resource allocation information is used to determine time domain resource allocation of the data, and there is a correspondence between the time domain resource allocation information and the despreading hypothesis. For example, the first despreading hypothesis or the second despreading hypothesis is configured in a PDSCH-time domain resource allocation (PDSCH-Time Domain Resource Allocation) information unit of RRC signaling configuration. When DCI signaling that schedules a PDSCH indicates time domain resource configuration information of the PDSCH, the despreading hypothesis of the DMRS may be determined correspondingly.
(9) A default rule, applied to the DRMS port corresponding to all or some of value items in the target indication table. For example, the default rule is: DMRS ports of all value items in the target indication table correspond to the first despreading hypothesis or the second despreading hypothesis. Alternatively, the default rule is: even if the network side indicates the second despreading hypothesis, DMRS ports of some value items in the target indication table always correspond to the first despreading hypothesis, and DMRS ports of the remaining value items correspondingly correspond to the second despreading hypothesis according to the indication of the network side.

Optionally, the despreading hypothesis includes at least one of the following: a first despreading hypothesis, including that the terminal performs channel estimation based on an FD-OCC sequence with a length as 2; and a second despreading hypothesis, including that the terminal performs channel estimation based on an FD-OCC sequence with a length as 4.

In this embodiment, one or more methods are provided for the first-type port to determine whether to perform channel estimation based on an FD-OCC sequence of the length 2 or an FD-OCC sequence of the length 4.

To describe the DMRS port information indication method provided by this embodiment of this application in detail, the following will provide description with several specific embodiments.

### Embodiment 1

In this embodiment, an example in which a DMRS configuration type is related to the DMRS configuration type 1 and a DMRS has a single-symbol structure is used, to describe the first-type port and the second-type port.

In an NR protocol of the related art, a DMRS of the DMRS configuration type 1 with a single-symbol structure includes a maximum of 4 ports: a port (port) 0, a port 1, a port 2, and a port 3. There may be two CDM groups. Ports belonging to a CDM group 0 are a port 0 and a port 1, and ports belonging to a CDM group 1 are a port 2 and a port 3.

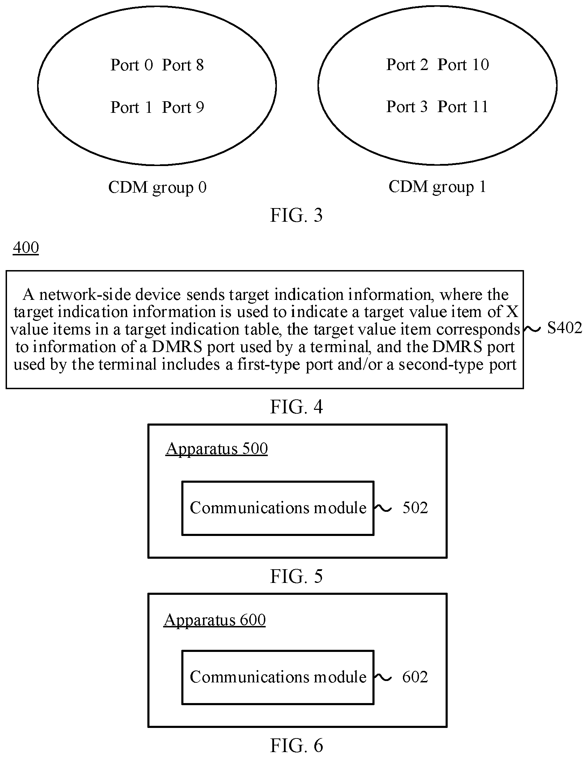

After DMRS port spreading thereof, it is assumed that the number of DMRS ports is spread to 8. Ports belonging to the CDM group 0 are the port 0, the port 1, a port 8, and a port 9, and ports belonging to the CDM group 1 are the port 2, the port 3, a port 10, and a port 11, as shown in FIG. 3. The port 0, the port 1, the port 2, and the port 3 are the first-type ports and occupy port numbers in the existing NR protocol, and the port 8, the port 9, the port 10, and the port 11 are second-type ports and are new port numbers obtained after spreading.

### Embodiment 2

In this embodiment, an example in which a DMRS configuration type is related to the DMRS configuration type 1 and a DMRS has a single-symbol structure is used, to illustrate the first indication table. When a DMRS configuration type of a PDSCH is related to the DMRS configuration type 1, a maximum length (max length) of a DMRS symbol is 1, and a single codeword corresponding to the PDSCH is enabled, the first indication table is as follows.

**Table 1 First indication table**

| Value item (Value) | Number of DMRS CDM groups without data (Number of DMRS CDM group(s) without data) | DMRS port (DMRS port (s)) |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 to 15 | Reserved (Reserved) | Reserved |

12 value items are included and all correspond to information of the first-type port (that is, the port 0, the port 1, the port 2, and the port 3). It should be noted that value items 12 to 15 are reserved items and correspond to no port.

Alternatively, the first indication table is as follows.

**Table 1A First indication table**

| Value item (Value) | Number of DMRS CDM groups without data (Number of DMRS CDM group(s) without data) | DMRS port (DMRS port (s)) |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 to 15 | Reserved (Reserved) | Reserved |

13 value items are included and all correspond to information of the first-type port (that is, the port 0, the port 1, the port 2, and the port 3). It should be noted that value items 13 to 15 are reserved items and correspond to no port.

When the first configuration information sent by the network side indicates that the target indication table is the first indication table, the first-type port is subject to channel estimation based on an FD-OCC sequence with a length as 2 as a despreading hypothesis or based on an FD-OCC sequence with a length as 4 as a despreading hypothesis by default. Indicating, by the first configuration information, that the target indication table is the first indication table includes a case in which the network does not configure the first configuration information, that is, in this case, the target indication table is the first indication table by default, and the first-type port is subject to channel estimation based on an FD-OCC sequence with a length as 2 as a despreading hypothesis or based on an FD-OCC sequence with a length as 4 as a despreading hypothesis by default. Alternatively, the first configuration information may be used to indicate whether the first-type port is subject to channel estimation based on an FD-OCC sequence with a length as 2 as a despreading hypothesis or based on an FD-OCC sequence with a length as 4 as a despreading hypothesis by default.

It should be noted that when the first-type port is subject to channel estimation based on an FD-OCC sequence with a length as 4 as a despreading hypothesis by default, some specific values may be excluded. First-type ports corresponding to the specific values come from multiple CDM groups. In this case, the first-type ports corresponding to the specific values are subject to channel estimation based on an FD-OCC sequence with a length as 2 as a despreading hypothesis. Taking Table 2 as an example, multiple first-type ports corresponding to values 9, 10, and 11 come from two CDM groups, instead of one CDM group. Therefore, the first-type ports corresponding to the values 9, 10, and 11 are always subject to channel estimation based on an FD-OCC sequence with a length as 2 as a despreading hypothesis.

### Embodiment 3

In this embodiment, an example in which a DMRS configuration type is related to the DMRS configuration type 1 and a DMRS has a single-symbol structure is used, to illustrate the second indication table. When a DMRS configuration type of a PDSCH is related to the DMRS configuration type 1, a maximum length (max length) of a DMRS symbol is 1, and a single codeword corresponding to the PDSCH is enabled, the second indication table is as follows.

**Table 2 Second indication table**

| Value item | Number of DMRS CDM groups without data | DMRS port |
|---|---|---|
| 0 | 1 | 8 |
| 1 | 1 | 9 |
| 2 | 1 | 8, 9 |
| 3 | 2 | 8 |
| 4 | 2 | 9 |
| 5 | 2 | 10 |
| 6 | 2 | 11 |
| 7 | 2 | 8, 9 |
| 8 | 2 | 8, 10 |
| 9 | 2 | 10, 11 |
| 10 | 2 | 0, 1, 8 |
| 11 | 2 | 2, 3, 10 |
| 12 | 2 | 0, 1, 8, 9 |
| 13 | 2 | 2, 3, 10, 11 |
| 14 to 15 | Reserved | Reserved |

14 value items are included, 10 value items correspond to the information of the second-type port (that is, a port 8, a port 9, a port 12, and a port 13), and 4 value items correspond to the information of the first-type port and the second-type port, that is, DMRS ports corresponding to the value items include the first-type port and the second-type port (for example, value items 10 to 13).

It should be noted that the correspondence between the value of the value item in the second indication table and the DMRS port, and the DMRS port corresponding to the value item in the second indication table are not limited to the above case, and there may be other second-type ports or a combination of the first-type port and the second-type port. For example, the second indication table may also be:

**Table 2A Second indication table**

| Value item | Number of DMRS CDM groups without data | DMRS port |
|---|---|---|
| 0 | 1 | 8 |
| 1 | 1 | 9 |
| 2 | 1 | 8, 9 |
| 3 | 1 | 0, 1, 8 |
| 4 | 1 | 0, 1, 8, 9 |
| 5 | 2 | 8 |
| 6 | 2 | 9 |
| 7 | 2 | 10 |
| 8 | 2 | 11 |
| 9 | 2 | 8, 9 |
| 10 | 2 | 10, 11 |
| 11 | 2 | 0, 1, 8 |
| 12 | 2 | 2, 3, 10 |
| 13 | 2 | 0, 1, 8, 9 |
| 14 | 2 | 2, 3, 10, 11 |
| 15 | Reserved | Reserved |

**or Table 2B Second indication table**

| Value item | Number of DMRS CDM groups without data | DMRS port |
|---|---|---|
| 0 | 2 | 8 |
| 1 | 2 | 9 |
| 2 | 2 | 10 |
| 3 | 2 | 11 |
| 4 | 2 | 8, 9 |
| 5 | 2 | 10, 11 |
| 6 | 2 | 0, 1, 8 |
| 7 | 2 | 2, 3, 10 |
| 8 | 2 | 0, 1, 8, 9 |
| 9 | 2 | 2, 3, 10, 11 |
| 10 to 15 | Reserved | Reserved |

When the first configuration information sent by the network side indicates that the target indication table is the second indication table, the first-type port and the second-type port are both subject to channel estimation based on an FD-OCC sequence with a length as 4 as a despreading hypothesis by default.

### Embodiment 4

In this embodiment, an example in which a DMRS configuration type is related to the DMRS configuration type 1 and a DMRS has a single-symbol structure is used, to illustrate the third indication table. When a DMRS configuration type of a PDSCH is related to the DMRS configuration type 1, a maximum length (max length) of a DMRS symbol is 1, and a single codeword corresponding to the PDSCH is enabled, the third indication table is as follows.

**Table 3 Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 1 | 8 |
| 13 | 1 | 9 |
| 14 | 1 | 8, 9 |
| 15 | 2 | 8 |
| 16 | 2 | 9 |
| 17 | 2 | 10 |
| 18 | 2 | 11 |
| 19 | 2 | 8, 9 |
| 20 | 2 | 8, 10 |
| 21 | 2 | 10, 11 |
| 22 | 2 | 0, 1, 8 |
| 23 | 2 | 2, 3, 10 |
| 24 | 2 | 0, 1, 8, 9 |
| 25 | 2 | 2, 3, 10, 11 |
| 26 to 31 | Reserved | Reserved |

26 value items are included, 12 value items correspond to the information of the first-type port (that is, a port 0, a port 1, a port 2, and a port 3), 10 value items correspond to the information of the second-type port (that is, a port 8, a port 9, a port 12, and a port 13), and 4 value items correspond to the information of the first-type port and the second-type port, that is, DMRS ports corresponding to the value items include the first-type port and the second-type port (for example, value items 22 to 25).

It should be noted that the correspondence between the value of the value item in the third indication table and the DMRS port, and the DMRS port corresponding to the value item in the third indication table are not limited to the above case. For example, the third indication table may also be:

**Table 3A Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 1 | 8 |
| 13 | 1 | 9 |
| 14 | 1 | 8, 9 |
| 15 | 1 | 0, 1, 8 |
| 16 | 1 | 0, 1, 8, 9 |
| 17 | 2 | 8 |
| 18 | 2 | 9 |
| 19 | 2 | 10 |
| 20 | 2 | 11 |
| 21 | 2 | 8, 9 |
| 22 | 2 | 10, 11 |
| 23 | 2 | 0, 1, 8 |
| 24 | 2 | 2, 3, 10 |
| 25 | 2 | 0, 1, 8, 9 |
| 26 | 2 | 2, 3, 10, 11 |
| 27 to 31 | Reserved | Reserved |

or

**Table 3B Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 8 |
| 13 | 2 | 9 |
| 14 | 2 | 10 |
| 15 | 2 | 11 |
| 16 | 2 | 8, 9 |
| 17 | 2 | 10, 11 |
| 18 | 2 | 0, 1, 8 |
| 19 | 2 | 2, 3, 10 |
| 20 | 2 | 0, 1, 8, 9 |
| 21 | 2 | 2, 3, 10, 11 |
| 22 to 31 | Reserved | Reserved |

or

**Table 3C Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 | 1 | 8 |
| 14 | 1 | 9 |
| 15 | 1 | 8, 9 |
| 16 | 2 | 8 |
| 17 | 2 | 9 |
| 18 | 2 | 10 |
| 19 | 2 | 11 |
| 20 | 2 | 8, 9 |
| 21 | 2 | 8, 10 |
| 22 | 2 | 10, 11 |
| 23 | 2 | 0, 1, 8 |
| 24 | 2 | 2, 3, 10 |
| 25 | 2 | 0, 1, 8, 9 |
| 26 | 2 | 2, 3, 10, 11 |
| 27 to 31 | Reserved | Reserved |

or

**Table 3D Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 | 1 | 8 |
| 14 | 1 | 9 |
| 15 | 1 | 8, 9 |
| 16 | 1 | 0, 1, 8 |
| 17 | 1 | 0, 1, 8, 9 |
| 18 | 2 | 8 |
| 19 | 2 | 9 |
| 20 | 2 | 10 |
| 21 | 2 | 11 |
| 22 | 2 | 8, 9 |
| 23 | 2 | 10, 11 |
| 24 | 2 | 0, 1, 8 |
| 25 | 2 | 2, 3, 10 |
| 26 | 2 | 0, 1, 8, 9 |
| 27 | 2 | 2, 3, 10, 11 |
| 28 to 31 | Reserved | Reserved |

or

**Table 3E Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 | 2 | 8 |
| 14 | 2 | 9 |
| 15 | 2 | 10 |
| 16 | 2 | 11 |
| 17 | 2 | 8, 9 |
| 18 | 2 | 10, 11 |
| 19 | 2 | 0, 1, 8 |
| 20 | 2 | 2, 3, 10 |
| 21 | 2 | 0, 1, 8, 9 |
| 22 | 2 | 2, 3, 10, 11 |
| 23 to 31 | Reserved | Reserved |

For Table 3, Table 3A, or Table 3B, when the value items are 0 to 11, or for Table 3C, Table 3D, or Table 3E, when the value items are 0 to 12, a signaling indication may be used to indicate whether the first-type port (the port 0, the port 1, the port 2, and the port 3) is subject to channel estimation based on an FD-OCC sequence with a length as 2 as a despreading hypothesis or based on an FD-OCC sequence with a length as 4 as a despreading hypothesis. An example is as follows.
(1) The signaling indication is the second configuration information sent by the network side, and the second configuration information is a scrambling code ID of a DMRS. When the scrambling code ID is 0, channel estimation is performed based on an FD-OCC sequence with a length as 2 as a despreading hypothesis. When the scrambling code ID is 1, channel estimation is performed based on an FD-OCC sequence with a length as 4 as a despreading hypothesis.
(2) Alternatively, the signaling indication is despreading indication information sent by the network side, and the despreading indication information is a specific indication field in DCI. For example, in a 1-bit indication field in DCI, when the bit is 0, channel estimation is performed based on an FD-OCC sequence with a length as 2 as a despreading hypothesis. When the bit is 1, channel estimation is performed based on an FD-OCC sequence with a length as 4 as a despreading hypothesis.
(3) Alternatively, the signaling indication is third configuration information sent by the network side of the terminal, and the third configuration information is used to instruct the terminal to perform despreading hypothesis for channel estimation. For example, the third configuration information is RRC signaling, a corresponding configuration field A is associated with an FD-OCC sequence with a length as 2, and a corresponding configuration field B is associated with an FD-OCC sequence with a length as 4. In a case of the configuration field A of the third configuration information, it indicates that channel estimation is performed based on an FD-OCC sequence with a length as 2 as the despreading hypothesis. In a case of the configuration field B of the third configuration information, it indicates that channel estimation is performed based on an FD-OCC sequence with a length as 4 as the despreading hypothesis.

It should be noted that when the first-type port is subject to channel estimation based on an FD-OCC sequence with a length as 4 as a despreading hypothesis by default, some specific values may be excluded. First-type ports corresponding to the specific values come from multiple CDM groups. In this case, the first-type ports corresponding to the specific values are always subject to channel estimation based on an FD-OCC sequence with a length as 2 as a despreading hypothesis. For example, the values 9, 10, and 11 in Table 3 are excluded.

### Embodiment 5

In this embodiment, an example in which a DMRS configuration type is related to the DMRS configuration type 1 and a DMRS has a single-symbol structure is used, to illustrate the third indication table. When a DMRS configuration type of a PDSCH is related to the DMRS configuration type 1, a maximum length (max length) of a DMRS symbol is 1, and a single codeword corresponding to the PDSCH is enabled, the third indication table is as follows.

**Table 4 Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 1 | 0 |
| 13 | 1 | 1 |
| 14 | 1 | 0, 1 |
| 15 | 2 | 0 |
| 16 | 2 | 1 |
| 17 | 2 | 2 |
| 18 | 2 | 3 |
| 19 | 2 | 0, 1 |
| 20 | 2 | 2, 3 |
| 21 | 2 | 0 - 2 |
| 22 | 2 | 0 - 3 |
| 23 | 2 | 0, 2 |
| 24 | 1 | 8 |
| 25 | 1 | 9 |
| 26 | 1 | 8, 9 |
| 27 | 2 | 8 |
| 28 | 2 | 9 |
| 29 | 2 | 10 |
| 30 | 2 | 11 |
| 31 | 2 | 8, 9 |
| 32 | 2 | 8, 10 |
| 33 | 2 | 10, 11 |
| 34 | 2 | 0, 1, 8 |
| 35 | 2 | 2, 3, 10 |
| 36 | 2 | 0, 1, 8, 9 |
| 37 | 2 | 2, 3, 10, 11 |
| 38 to 63 | Reserved | Reserved |

38 value items are included, 24 value items correspond to the information of the first-type port (that is, a port 0, a port 1, a port 2, and a port 3), 10 value items correspond to the information of the second-type port (that is, a port 8, a port 9, a port 12, and a port 13), and 4 value items correspond to the information of the first-type port and the second-type port, that is, DMRS ports corresponding to the value items include the first-type port and the second-type port (for example, value items 34 to 37).

It should be noted that the correspondence between the value of the value item in the third indication table and the DMRS port, and the DMRS port corresponding to the value item in the third indication table are not limited to the above case. For example, the third indication table may also be:

**Table 4A Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 1 | 0 |
| 13 | 1 | 1 |
| 14 | 1 | 0, 1 |
| 15 | 2 | 0 |
| 16 | 2 | 1 |
| 17 | 2 | 2 |
| 18 | 2 | 3 |
| 19 | 2 | 0, 1 |
| 20 | 2 | 2, 3 |
| 21 | 1 | 8 |
| 22 | 1 | 9 |
| 23 | 1 | 8, 9 |
| 24 | 1 | 0, 1, 8 |
| 25 | 1 | 0, 1, 8, 9 |
| 26 | 2 | 8 |
| 27 | 2 | 9 |
| 28 | 2 | 10 |
| 29 | 2 | 11 |
| 30 | 2 | 8, 9 |
| 31 | 2 | 10, 11 |
| 32 | 2 | 0, 1, 8 |
| 33 | 2 | 2, 3, 10 |
| 34 | 2 | 0, 1, 8, 9 |
| 35 | 2 | 2, 3, 10, 11 |
| 36 to 63 | Reserved | Reserved |

or

**Table 4B Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0 |
| 13 | 2 | 1 |
| 14 | 2 | 2 |
| 15 | 2 | 3 |
| 16 | 2 | 0, 1 |
| 17 | 2 | 2, 3 |
| 18 | 2 | 8 |
| 19 | 2 | 9 |
| 20 | 2 | 10 |
| 21 | 2 | 11 |
| 22 | 2 | 8, 9 |
| 23 | 2 | 10, 11 |
| 24 | 2 | 0, 1, 8 |
| 25 | 2 | 2, 3, 10 |
| 26 | 2 | 0, 1, 8, 9 |
| 27 | 2 | 2, 3, 10, 11 |
| 28 to 31 | Reserved | Reserved |

or

**Table 4C Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 | 1 | 0 |
| 14 | 1 | 1 |
| 15 | 1 | 0, 1 |
| 16 | 2 | 0 |
| 17 | 2 | 1 |
| 18 | 2 | 2 |
| 19 | 2 | 3 |
| 20 | 2 | 0, 1 |
| 21 | 2 | 2, 3 |
| 22 | 2 | 0 - 2 |
| 23 | 2 | 0 - 3 |
| 24 | 2 | 0, 2 |
| 25 | 2 | 0, 2, 3 |
| 26 | 1 | 8 |
| 27 | 1 | 9 |
| 28 | 1 | 8, 9 |
| 29 | 2 | 8 |
| 30 | 2 | 9 |
| 31 | 2 | 10 |
| 32 | 2 | 11 |
| 33 | 2 | 8, 9 |
| 34 | 2 | 8, 10 |
| 35 | 2 | 10, 11 |
| 36 | 2 | 0, 1, 8 |
| 37 | 2 | 2, 3, 10 |
| 38 | 2 | 0, 1, 8, 9 |
| 39 | 2 | 2, 3, 10, 11 |
| 40 to 63 | Reserved | Reserved |

or

**Table 4D Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 | 1 | 0 |
| 14 | 1 | 1 |
| 15 | 1 | 0, 1 |
| 16 | 2 | 0 |
| 17 | 2 | 1 |
| 18 | 2 | 2 |
| 19 | 2 | 3 |
| 20 | 2 | 0, 1 |
| 21 | 2 | 2, 3 |
| 22 | 1 | 8 |
| 23 | 1 | 9 |
| 24 | 1 | 8, 9 |
| 25 | 1 | 0, 1, 8 |
| 26 | 1 | 0, 1, 8, 9 |
| 27 | 2 | 8 |
| 28 | 2 | 9 |
| 29 | 2 | 10 |
| 30 | 2 | 11 |
| 31 | 2 | 8, 9 |
| 32 | 2 | 10, 11 |
| 33 | 2 | 0, 1, 8 |
| 34 | 2 | 2, 3, 10 |
| 35 | 2 | 0, 1, 8, 9 |
| 36 | 2 | 2, 3, 10, 11 |
| 37 to 63 | Reserved | Reserved |

or

**Table 4E Third indication table**

| Value item | Number of DMRS CDM groups without data | DMRS port |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0 - 2 |
| 10 | 2 | 0 - 3 |
| 11 | 2 | 0, 2 |
| 12 | 2 | 0, 2, 3 |
| 13 | 2 | 0 |
| 14 | 2 | 1 |
| 15 | 2 | 2 |
| 16 | 2 | 3 |
| 17 | 2 | 0, 1 |
| 18 | 2 | 2, 3 |
| 19 | 2 | 8 |
| 20 | 2 | 9 |
| 21 | 2 | 10 |
| 22 | 2 | 11 |
| 23 | 2 | 8, 9 |
| 24 | 2 | 10, 11 |
| 25 | 2 | 0, 1, 8 |
| 26 | 2 | 2, 3, 10 |
| 27 | 2 | 0, 1, 8, 9 |
| 28 | 2 | 2, 3, 10, 11 |
| 29 to 31 | Reserved | Reserved |

In this embodiment, for Table 4, Table 4A, or Table 4B, when the value corresponding to the value item is less than or equal to A, it corresponds to the first despreading hypothesis, and when the value corresponding to the value item is greater than or equal to A, it corresponds to the second despreading hypothesis, where A=11. That is, the network side and the terminal agree by default that the value items 0 to 11 correspond to channel estimation based on an FD-OCC sequence with a length 2 as a despreading hypothesis, and the remaining value items correspond to channel estimation based on an FD-OCC sequence with a length 4 as a despreading hypothesis.

In this embodiment, for Table 4C, Table 4D, or Table 4E, when the value corresponding to the value item is less than or equal to A, it corresponds to the first despreading hypothesis, and when the value corresponding to the value item is greater than or equal to A, it corresponds to the second despreading hypothesis, where A=12. That is, the network side and the terminal agree by default that the value items 0 to 12 correspond to channel estimation based on an FD-OCC sequence with a length 2 as a despreading hypothesis, and the remaining value items correspond to channel estimation based on an FD-OCC sequence with a length 4 as a despreading hypothesis.

### Embodiment 6

In this embodiment, an example in which a DMRS configuration type is related to the DMRS configuration type 1 and a DMRS has a single-symbol structure is used, to illustrate the third indication table. When a DMRS configuration type of a PDSCH is related to the DMRS configuration type 1, a maximum length (max length) of a DMRS symbol is 1, and a single codeword corresponding to the PDSCH is enabled, the third indication table is as follows.

**Table 5 Third indication table**

| Value item | Number of DMRS CDM groups without data | DMRS port | Despreading hypothesis identifier |
|---|---|---|---|
| 0 | 1 | 0 | FD-OCC=2 |
| 1 | 1 | 1 | FD-OCC=2 |
| 2 | 1 | 0, 1 | FD-OCC=2 |
| 3 | 2 | 0 | FD-OCC=2 |
| 4 | 2 | 1 | FD-OCC=2 |
| 5 | 2 | 2 | FD-OCC=2 |
| 6 | 2 | 3 | FD-OCC=2 |
| 7 | 2 | 0, 1 | FD-OCC=2 |
| 8 | 2 | 2, 3 | FD-OCC=2 |
| 9 | 2 | 0 - 2 | FD-OCC=2 |
| 10 | 2 | 0 - 3 | FD-OCC=2 |
| 11 | 2 | 0, 2 | FD-OCC=2 |
| 12 | 1 | 0 | FD-OCC=4 |
| 13 | 1 | 1 | FD-OCC=4 |
| 14 | 1 | 0, 1 | FD-OCC=4 |
| 15 | 2 | 0 | FD-OCC=4 |
| 16 | 2 | 1 | FD-OCC=4 |
| 17 | 2 | 2 | FD-OCC=4 |
| 18 | 2 | 3 | FD-OCC=4 |
| 19 | 2 | 0, 1 | FD-OCC=4 |
| 20 | 2 | 2, 3 | FD-OCC=4 |
| 21 | 2 | 0 - 2 | FD-OCC=4 |
| 22 | 2 | 0 - 3 | FD-OCC=4 |
| 23 | 2 | 0, 2 | FD-OCC=4 |
| 24 | 1 | 8 | FD-OCC=4 |
| 25 | 1 | 9 | FD-OCC=4 |
| 26 | 1 | 8, 9 | FD-OCC=4 |
| 27 | 2 | 8 | FD-OCC=4 |
| 28 | 2 | 9 | FD-OCC=4 |
| 29 | 2 | 10 | FD-OCC=4 |
| 30 | 2 | 11 | FD-OCC=4 |
| 31 | 2 | 8, 9 | FD-OCC=4 |
| 32 | 2 | 8, 10 | FD-OCC=4 |
| 33 | 2 | 10, 11 | FD-OCC=4 |
| 34 | 2 | 0, 1, 8 | FD-OCC=4 |
| 35 | 2 | 2, 3, 10 | FD-OCC=4 |
| 36 | 2 | 0, 1, 8, 9 | FD-OCC=4 |
| 37 | 2 | 2, 3, 10, 11 | FD-OCC=4 |
| 38 to 63 | Reserved | Reserved | |

38 value items are included, 24 value items correspond to the information of the first-type port (that is, a port 0, a port 1, a port 2, and a port 3), 10 value items correspond to the information of the second-type port (that is, a port 8, a port 9, a port 12, and a port 13), and 4 value items correspond to the information of the first-type port and the second-type port, that is, DMRS ports corresponding to the value items include the first-type port and the second-type port (for example, value items 34 to 37).

It should be noted that the correspondence between the value of the value item in the third indication table and the DMRS port, and the DMRS port corresponding to the value item in the third indication table are not limited to the above case. For example, the third indication table may also be:

**Table 5A Third indication table**

| Value item | Number of DMRS CDM groups without data | DMRS port | Despreading hypothesis identifier |
|---|---|---|---|
| 0 | 1 | 0 | FD-OCC=2 |
| 1 | 1 | 1 | FD-OCC=2 |
| 2 | 1 | 0, 1 | FD-OCC=2 |
| 3 | 2 | 0 | FD-OCC=2 |
| 4 | 2 | 1 | FD-OCC=2 |
| 5 | 2 | 2 | FD-OCC=2 |
| 6 | 2 | 3 | FD-OCC=2 |
| 7 | 2 | 0, 1 | FD-OCC=2 |
| 8 | 2 | 2, 3 | FD-OCC=2 |
| 9 | 2 | 0 - 2 | FD-OCC=2 |
| 10 | 2 | 0 - 3 | FD-OCC=2 |
| 11 | 2 | 0, 2 | FD-OCC=2 |
| 12 | 1 | 0 | FD-OCC=4 |
| 13 | 1 | 1 | FD-OCC=4 |
| 14 | 1 | 0, 1 | FD-OCC=4 |
| 15 | 2 | 0 | FD-OCC=4 |
| 16 | 2 | 1 | FD-OCC=4 |
| 17 | 2 | 2 | FD-OCC=4 |
| 18 | 2 | 3 | FD-OCC=4 |
| 19 | 2 | 0, 1 | FD-OCC=4 |
| 20 | 2 | 2, 3 | FD-OCC=4 |
| 21 | 1 | 8 | FD-OCC=4 |
| 22 | 1 | 9 | FD-OCC=4 |
| 23 | 1 | 8, 9 | FD-OCC=4 |
| 24 | 1 | 0, 1, 8 | FD-OCC=4 |
| 25 | 1 | 0, 1, 8, 9 | FD-OCC=4 |
| 26 | 2 | 8 | FD-OCC=4 |
| 27 | 2 | 9 | FD-OCC=4 |
| 28 | 2 | 10 | FD-OCC=4 |
| 29 | 2 | 11 | FD-OCC=4 |
| 30 | 2 | 8, 9 | FD-OCC=4 |
| 31 | 2 | 10, 11 | FD-OCC=4 |
| 32 | 2 | 0, 1, 8 | FD-OCC=4 |
| 33 | 2 | 2, 3, 10 | FD-OCC=4 |
| 34 | 2 | 0, 1, 8, 9 | FD-OCC=4 |
| 35 | 2 | 2, 3, 10, 11 | FD-OCC=4 |
| 36 to 63 | Reserved | Reserved | |

or

**Table 5B Third indication table**

| Value item | Number of DMRS CDM groups without data | DMRS port | Despreading hypothesis identifier |
|---|---|---|---|
| 0 | 1 | 0 | FD-OCC=2 |
| 1 | 1 | 1 | FD-OCC=2 |
| 2 | 1 | 0, 1 | FD-OCC=2 |
| 3 | 2 | 0 | FD-OCC=2 |
| 4 | 2 | 1 | FD-OCC=2 |
| 5 | 2 | 2 | FD-OCC=2 |
| 6 | 2 | 3 | FD-OCC=2 |
| 7 | 2 | 0, 1 | FD-OCC=2 |
| 8 | 2 | 2, 3 | FD-OCC=2 |
| 9 | 2 | 0 - 2 | FD-OCC=2 |
| 10 | 2 | 0 - 3 | FD-OCC=2 |
| 11 | 2 | 0, 2 | FD-OCC=2 |
| 12 | 2 | 0 | FD-OCC=4 |
| 13 | 2 | 1 | FD-OCC=4 |
| 14 | 2 | 2 | FD-OCC=4 |
| 15 | 2 | 3 | FD-OCC=4 |
| 16 | 2 | 0, 1 | FD-OCC=4 |
| 17 | 2 | 2, 3 | FD-OCC=4 |
| 18 | 2 | 8 | FD-OCC=4 |
| 19 | 2 | 9 | FD-OCC=4 |
| 20 | 2 | 10 | FD-OCC=4 |
| 21 | 2 | 11 | FD-OCC=4 |
| 22 | 2 | 8, 9 | FD-OCC=4 |
| 23 | 2 | 10, 11 | FD-OCC=4 |
| 24 | 2 | 0, 1, 8 | FD-OCC=4 |
| 25 | 2 | 2, 3, 10 | FD-OCC=4 |
| 26 | 2 | 0, 1, 8, 9 | FD-OCC=4 |
| 27 | 2 | 2, 3, 10, 11 | FD-OCC=4 |
| 28 to 31 | Reserved | Reserved | |

or

**Table 5C Third indication table**

| Value item | Number of DMRS CDM groups without data | DMRS port | Despreading hypothesis identifier |
|---|---|---|---|
| 0 | 1 | 0 | FD-OCC=2 |
| 1 | 1 | 1 | FD-OCC=2 |
| 2 | 1 | 0, 1 | FD-OCC=2 |
| 3 | 2 | 0 | FD-OCC=2 |
| 4 | 2 | 1 | FD-OCC=2 |
| 5 | 2 | 2 | FD-OCC=2 |
| 6 | 2 | 3 | FD-OCC=2 |
| 7 | 2 | 0, 1 | FD-OCC=2 |
| 8 | 2 | 2, 3 | FD-OCC=2 |
| 9 | 2 | 0 - 2 | FD-OCC=2 |
| 10 | 2 | 0 - 3 | FD-OCC=2 |
| 11 | 2 | 0, 2 | FD-OCC=2 |
| 12 | 2 | 0, 2, 3 | FD-OCC=2 |
| 13 | 1 | 0 | FD-OCC=4 |
| 14 | 1 | 1 | FD-OCC=4 |
| 15 | 1 | 0, 1 | FD-OCC=4 |
| 16 | 2 | 0 | FD-OCC=4 |
| 17 | 2 | 1 | FD-OCC=4 |
| 18 | 2 | 2 | FD-OCC=4 |
| 19 | 2 | 3 | FD-OCC=4 |
| 20 | 2 | 0, 1 | FD-OCC=4 |
| 21 | 2 | 2, 3 | FD-OCC=4 |
| 22 | 2 | 0 to 2 | FD-OCC=4 |
| 23 | 2 | 0 to 3 | FD-OCC=4 |
| 24 | 2 | 0, 2 | FD-OCC=4 |
| 25 | 2 | 0, 2, 3 | FD-OCC=4 |
| 26 | 1 | 8 | FD-OCC=4 |
| 27 | 1 | 9 | FD-OCC=4 |
| 28 | 1 | 8, 9 | FD-OCC=4 |
| 29 | 2 | 8 | FD-OCC=4 |
| 30 | 2 | 9 | FD-OCC=4 |
| 31 | 2 | 10 | FD-OCC=4 |
| 32 | 2 | 11 | FD-OCC=4 |
| 33 | 2 | 8, 9 | FD-OCC=4 |
| 34 | 2 | 8, 10 | FD-OCC=4 |
| 35 | 2 | 10, 11 | FD-OCC=4 |
| 36 | 2 | 0, 1, 8 | FD-OCC=4 |
| 37 | 2 | 2, 3, 10 | FD-OCC=4 |
| 38 | 2 | 0, 1, 8, 9 | FD-OCC=4 |
| 39 | 2 | 2, 3, 10, 11 | FD-OCC=4 |
| 40 to 63 | Reserved | Reserved | |

or

**Table 5D Third indication table**

| Value item | Number of DMRS CDM groups without data | DMRS port | Despreading hypothesis identifier |
|---|---|---|---|
| 0 | 1 | 0 | FD-OCC=2 |
| 1 | 1 | 1 | FD-OCC=2 |
| 2 | 1 | 0, 1 | FD-OCC=2 |
| 3 | 2 | 0 | FD-OCC=2 |
| 4 | 2 | 1 | FD-OCC=2 |
| 5 | 2 | 2 | FD-OCC=2 |
| 6 | 2 | 3 | FD-OCC=2 |
| 7 | 2 | 0, 1 | FD-OCC=2 |
| 8 | 2 | 2, 3 | FD-OCC=2 |
| 9 | 2 | 0 - 2 | FD-OCC=2 |
| 10 | 2 | 0 - 3 | FD-OCC=2 |
| 11 | 2 | 0, 2 | FD-OCC=2 |
| 12 | 2 | 0, 2, 3 | FD-OCC=2 |
| 13 | 1 | 0 | FD-OCC=4 |
| 14 | 1 | 1 | FD-OCC=4 |
| 15 | 1 | 0, 1 | FD-OCC=4 |
| 16 | 2 | 0 | FD-OCC=4 |
| 17 | 2 | 1 | FD-OCC=4 |
| 18 | 2 | 2 | FD-OCC=4 |
| 19 | 2 | 3 | FD-OCC=4 |
| 20 | 2 | 0, 1 | FD-OCC=4 |
| 21 | 2 | 2, 3 | FD-OCC=4 |
| 22 | 1 | 8 | FD-OCC=4 |
| 23 | 1 | 9 | FD-OCC=4 |
| 24 | 1 | 8, 9 | FD-OCC=4 |
| 25 | 1 | 0, 1, 8 | FD-OCC=4 |
| 26 | 1 | 0, 1, 8, 9 | FD-OCC=4 |
| 27 | 2 | 8 | FD-OCC=4 |
| 28 | 2 | 9 | FD-OCC=4 |
| 29 | 2 | 10 | FD-OCC=4 |
| 30 | 2 | 11 | FD-OCC=4 |
| 31 | 2 | 8, 9 | FD-OCC=4 |
| 32 | 2 | 10, 11 | FD-OCC=4 |
| 33 | 2 | 0, 1, 8 | FD-OCC=4 |
| 34 | 2 | 2, 3, 10 | FD-OCC=4 |
| 35 | 2 | 0, 1, 8, 9 | FD-OCC=4 |
| 36 | 2 | 2, 3, 10, 11 | FD-OCC=4 |
| 37 to 63 | Reserved | Reserved | |

or

**Table 5E Third indication table**

| Value item | Number of DMRS CDM groups without data | DMRS port | Despreading hypothesis identifier |
|---|---|---|---|
| 0 | 1 | 0 | FD-OCC=2 |
| 1 | 1 | 1 | FD-OCC=2 |
| 2 | 1 | 0, 1 | FD-OCC=2 |
| 3 | 2 | 0 | FD-OCC=2 |
| 4 | 2 | 1 | FD-OCC=2 |
| 5 | 2 | 2 | FD-OCC=2 |
| 6 | 2 | 3 | FD-OCC=2 |
| 7 | 2 | 0, 1 | FD-OCC=2 |
| 8 | 2 | 2, 3 | FD-OCC=2 |
| 9 | 2 | 0 - 2 | FD-OCC=2 |
| 10 | 2 | 0 - 3 | FD-OCC=2 |
| 11 | 2 | 0, 2 | FD-OCC=2 |
| 12 | 2 | 0, 2, 3 | FD-OCC=2 |
| 13 | 2 | 0 | FD-OCC=4 |
| 14 | 2 | 1 | FD-OCC=4 |
| 15 | 2 | 2 | FD-OCC=4 |
| 16 | 2 | 3 | FD-OCC=4 |
| 17 | 2 | 0, 1 | FD-OCC=4 |
| 18 | 2 | 2, 3 | FD-OCC=4 |
| 19 | 2 | 8 | FD-OCC=4 |
| 20 | 2 | 9 | FD-OCC=4 |
| 21 | 2 | 10 | FD-OCC=4 |
| 22 | 2 | 11 | FD-OCC=4 |
| 23 | 2 | 8, 9 | FD-OCC=4 |
| 24 | 2 | 10, 11 | FD-OCC=4 |
| 25 | 2 | 0, 1, 8 | FD-OCC=4 |
| 26 | 2 | 2, 3, 10 | FD-OCC=4 |
| 27 | 2 | 0, 1, 8, 9 | FD-OCC=4 |
| 28 | 2 | 2, 3, 10, 11 | FD-OCC=4 |
| 29 to 31 | Reserved | Reserved | |

It is agreed by default that the third indication table carries the despreading hypothesis identifier, for example, the despreading hypothesis identifier is FD-OCC=2 or FD-OCC=4 (which may be other fields and are examples herein). For Table 5, Table 5A, or Table 5B, the value items 0 to 11 correspond to channel estimation based on an FD-OCC sequence with a length 2 as a despreading hypothesis, and the remaining value items correspond to channel estimation based on an FD-OCC sequence with a length 4 as a despreading hypothesis. For Table 5C, Table 5D, or Table 5E, the value items 0 to 12 correspond to channel estimation based on an FD-OCC sequence with a length 2 as a despreading hypothesis, and the remaining value items correspond to channel estimation based on an FD-OCC sequence with a length 4 as a despreading hypothesis.

### Embodiment 7

In this embodiment, an example in which a DMRS configuration type is related to the DMRS configuration type 1 and a DMRS has a single-symbol structure is used, to illustrate the fourth indication table. When a DMRS configuration type of a PDSCH is related to the DMRS configuration type 1, a maximum length (max length) of a DMRS symbol is 1, and dual codewords corresponding to the PDSCH is enabled, the fourth indication table is as follows.

**Table 6 Fourth indication table**

| Value item | Number of DMRS CDM groups without data | DMRS port |
|---|---|---|
| 0 | 2 | 0, 1, 2, 3, 8 |
| 1 | 2 | 0, 1, 2, 3, 8, 10 |
| 2 | 2 | 0, 1, 2, 3, 8, 9, 10 |
| 3 | 2 | 0, 1, 2, 3, 8, 9, 10, 11 |
| 4 to Z | Reserved | Reserved |

4 value items are included, and the 4 value items all correspond to the information of the first-type port and the second-type port, that is, DMRS ports corresponding to the value items include the first-type port and the second-type port.

### Embodiment 8

It should be noted that Embodiment 2 to Embodiment 7 only use the example in which a DMRS configuration type of a PDSCH is related to the DMRS configuration type 1, a maximum length (max length) of a DMRS symbol is 1, and a single codeword or dual codewords corresponding to the PDSCH is enabled. Other cases, for example, a DMRS configuration type is related to the DMRS configuration type 2, a maximum length of a DMRS symbol is 2, and a DMRS corresponds to PUSCH transmission, are all applicable.

The above describes the DMRS port information indication method according to the embodiments of this application in detail with reference to FIG. 2. The following describes the DMRS port information indication method according to another embodiment of this application in detail with reference to FIG. 4. It may be understood that interaction between a network-side device and a terminal described on the network-side device is the same as that described on the terminal side in the method shown in FIG. 2. To avoid repetition, relevant descriptions are appropriately omitted.

FIG. 4 is a schematic flowchart of an implementation process of a DMRS port information indication method according to an embodiment of this application. The method may be applied to a network-side device. As shown in FIG. 4, the method 400 includes the following steps.

S402: A network-side device sends target indication information, where the target indication information is used to indicate a target value item of X value items in a target indication table, the target value item corresponds to information of a DMRS port used by the terminal, the DMRS port used by the terminal includes a first-type port and/or a second-type port, and X is a positive integer.

In this embodiment of this application, the target value item of the X value items in the target indication table is indicated, so that the first-type port and/or the second-type port can be indicated. In this way, the first-type port and the second-type port can be indicated and distinguished, and this helps increase a number of DMRS ports, increase a number of MU-MIMO users and a number of simultaneously transmitted data streams, and improve the performance of a communication system.

Optionally, as an embodiment, the first-type port and the second-type port satisfy at least one of the following:
(1) a port index of the second-type port is greater than or equal to a port index of the first-type port;
(2) the second-type port and the first-type port belong to different CDM groups;
(3) the second-type port and the first-type port correspond to different FD-OCC sequences; and
(4) the second-type port and the first-type port correspond to different TD-OCC sequences.

Optionally, as an embodiment, the target indication table includes one of the following:
(1) a first indication table, where X value items in the first indication table correspond to information of the first-type port;
(2) a second indication table, where N of X value items in the second indication table correspond to information of the second-type port, X-N value items correspond to information of the first-type port and the second-type port, and N is a positive integer and N is less than X;
(3) a third indication table, where M of X value items in the third indication table correspond to information of the first-type port, P value items correspond to information of the second-type port, X-M-P value items correspond to information of the first-type port and the second-type port, M and P are positive integers, and X is greater than a sum of M and P; and
(4) a fourth indication table, where X value items in the fourth indication table correspond to information of the first-type port and the second-type port.

Optionally, as an embodiment, the method further includes: sending, by the network-side device, first configuration information, where the first configuration information is used to indicate the target indication table used by the terminal, or to instruct the terminal to switch the target indication table.

Optionally, as an embodiment, the switching the target indication table includes one of the following: (1) switching between the first indication table and the second indication table; (2) switching between the first indication table and the third indication table; and (3) switching between the first indication table and the fourth indication table.

Optionally, as an embodiment, the method further includes: receiving, by the network-side device, first capability information, where the first capability information is used to indicate whether the terminal supports the second-type port.

Optionally, as an embodiment, in a case that the terminal does not support the second-type port, the terminal only supports being configured with the first indication table; and in a case that the terminal supports the second-type port, the terminal supports being configured with at least one of the following: the first indication table, the second indication table, the third indication table, and the fourth indication table.

The DMRS port information indication method provided by this embodiment of this application may be performed by a DMRS port information indication apparatus. In this embodiment of this application, an example in which the DMRS port information indication method is performed by a DMRS port information indication apparatus is used to describe the DMRS port information indication apparatus provided by the embodiments of this application.

FIG. 5 is a schematic structural diagram of a DMRS port information indication apparatus according to an embodiment of this application. The apparatus may correspond to a terminal in other embodiments. As shown in FIG. 5, the apparatus 500 includes the following modules:
a communications module 502, configured to receive target indication information; where the target indication information is used to indicate a target value item of X value items in a target indication table, the target value item corresponds to information of a DMRS port used by the apparatus, the DMRS port used by the apparatus includes a first-type port and/or a second-type port, and X is a positive integer; and
the communications module 502 is further configured to send data or receive data according to the information of the DMRS port.

Optionally, the apparatus further includes a processing module.

In this embodiment of this application, the target value item of the X value items in the target indication table is indicated, so that the first-type port and/or the second-type port can be indicated. In this way, the first-type port and the second-type port can be indicated and distinguished, and this helps increase a number of DMRS ports, increase a number of MU-MIMO users and a number of simultaneously transmitted data streams, and improve the performance of a communication system.

Optionally, as an embodiment, the first-type port and the second-type port satisfy at least one of the following:
(1) a port index of the second-type port is greater than or equal to a port index of the first-type port;
(2) the second-type port and the first-type port belong to different CDM groups;
(3) the second-type port and the first-type port correspond to different FD-OCC sequences; and
(4) the second-type port and the first-type port correspond to different TD-OCC sequences.

Optionally, as an embodiment, the target indication table includes one of the following:
(1) a first indication table, where X value items in the first indication table correspond to information of the first-type port;
(2) a second indication table, where N of X value items in the second indication table correspond to information of the second-type port, X-N value items correspond to information of the first-type port and the second-type port, and N is a positive integer and N is less than X;
(3) a third indication table, where M of X value items in the third indication table correspond to information of the first-type port, P value items correspond to information of the second-type port, X-M-P value items correspond to information of the first-type port and the second-type port, M and P are positive integers, and X is greater than a sum of M and P; and
(4) a fourth indication table, where X value items in the fourth indication table correspond to information of the first-type port and the second-type port.

Optionally, as an embodiment, the communications module 502 is further configured to receive first configuration information, where the first configuration information is used to instruct the apparatus to use the target indication table, or to instruct the apparatus to switch the target indication table.

Optionally, as an embodiment, the switching the target indication table includes one of the following: (1) switching between the first indication table and the second indication table; (2) switching between the first indication table and the third indication table; and (3) switching between the first indication table and the fourth indication table.

Optionally, as an embodiment, the communications module 502 is further configured to report first capability information, where the first capability information is used to indicate whether the apparatus supports the second-type port.

Optionally, as an embodiment, in a case that the apparatus does not support the second-type port, the apparatus only supports being configured with the first indication table; and in a case that the apparatus supports the second-type port, the apparatus supports being configured with at least one of the following: the first indication table, the second indication table, the third indication table, and the fourth indication table.

Optionally, as an embodiment, the apparatus further includes a processing module, configured to determine, based on one of the following, a despreading hypothesis corresponding to channel estimation of the DMRS port:
(1) first configuration information, where the first configuration information is used to indicate the target indication table used by the terminal, or to instruct the terminal to switch the target indication table, and there is a correspondence between the first configuration information and the despreading hypothesis;
(2) second configuration information, where the second configuration information includes a scrambling code identifier ID of a DMRS, and there is a correspondence between the scrambling code ID and the despreading hypothesis;
(3) third configuration information, where there is a correspondence between the third configuration information and the despreading hypothesis;
(4) despreading indication information, where the despreading indication information includes information corresponding to a specific indication field in downlink control information DCI, and there is a correspondence between the information corresponding to the specific indication field and the despreading hypothesis;
(5) a value corresponding to a value item in the target indication table, where there is a correspondence between a value corresponding to the target value item and the despreading hypothesis;
(6) information of the DMRS port corresponding to a value item in the target indication table, where there is a correspondence between the information of the DMRS port and the despreading hypothesis;
(7) a despreading hypothesis identifier in the target indication table, where there is a correspondence between the despreading hypothesis identifier and the despreading hypothesis;
(8) time domain resource allocation information, where the time domain resource allocation information is used to determine time domain resource allocation of the data, and there is a correspondence between the time domain resource allocation information and the despreading hypothesis; and
(9) a default rule, applied to the DRMS port corresponding to all or some of value items in the target indication table.

Optionally, as an embodiment, the despreading hypothesis includes at least one of the following: (1) a first despreading hypothesis, including that the apparatus performs channel estimation based on an OCC sequence with a length as 2; and (2) a second despreading hypothesis, including that the apparatus performs channel estimation based on an OCC sequence with a length as 4.

For the apparatus 500 according to this embodiment of this application, refer to the process of the method 200 corresponding to the embodiments of this application, and each unit/module in the apparatus 500 and the above-mentioned other operations and/or functions are respectively used to implement corresponding processes in the method 200 and can achieve the same or equivalent technical effect. For brevity, no more details are described herein.

The DMRS port information indication apparatus in this embodiment of this application may be an electronic device, such as an electronic device with an operating system, or may be a component in the electronic device, such as an integrated circuit or a chip. The electronic device may be a terminal or other devices other than the terminal. For example, the terminal may include but is not limited to the types of terminals 11 listed above, and other devices may be servers, network attached storages (Network Attached Storage, NAS), or the like, which are not specifically limited in the embodiments of this application.

FIG. 6 is a schematic structural diagram of a DMRS port information indication apparatus according to an embodiment of this application. The apparatus may correspond to a network-side device in other embodiments. As shown in FIG. 6, the apparatus 600 includes the following modules:
a communications module 602, configured to send target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer.

Optionally, the apparatus further includes a processing module.

In this embodiment of this application, the target value item of the X value items in the target indication table is indicated, so that the first-type port and/or the second-type port can be indicated. In this way, the first-type port and the second-type port can be indicated and distinguished, and this helps increase a number of DMRS ports, increase a number of MU-MIMO users and a number of simultaneously transmitted data streams, and improve the performance of a communication system.

Optionally, as an embodiment, the first-type port and the second-type port satisfy at least one of the following:
(1) a port index of the second-type port is greater than or equal to a port index of the first-type port;
(2) the second-type port and the first-type port belong to different CDM groups;
(3) the second-type port and the first-type port correspond to different FD-OCC sequences; and
(4) the second-type port and the first-type port correspond to different TD-OCC sequences.

Optionally, as an embodiment, the target indication table includes one of the following:
(1) a first indication table, where X value items in the first indication table correspond to information of the first-type port;
(2) a second indication table, where N of X value items in the second indication table correspond to information of the second-type port, X-N value items correspond to information of the first-type port and the second-type port, and N is a positive integer and N is less than X;
(3) a third indication table, where M of X value items in the third indication table correspond to information of the first-type port, P value items correspond to information of the second-type port, X-M-P value items correspond to information of the first-type port and the second-type port, M and P are positive integers, and X is greater than a sum of M and P; and
(4) a fourth indication table, where X value items in the fourth indication table correspond to information of the first-type port and the second-type port.

Optionally, as an embodiment, the communications module 602 is further configured to send first configuration information, where the first configuration information is used to indicate the target indication table used by the terminal, or to instruct the terminal to switch the target indication table.

Optionally, as an embodiment, the switching the target indication table includes one of the following: (1) switching between the first indication table and the second indication table; (2) switching between the first indication table and the third indication table; and (3) switching between the first indication table and the fourth indication table.

Optionally, as an embodiment, the communications module 602 is further configured to receive first capability information, where the first capability information is used to indicate whether the terminal supports the second-type port.

Optionally, as an embodiment, in a case that the terminal does not support the second-type port, the terminal only supports being configured with the first indication table; and in a case that the terminal supports the second-type port, the terminal supports being configured with at least one of the following: the first indication table, the second indication table, the third indication table, and the fourth indication table.

For the apparatus 600 according to this embodiment of this application, refer to the process of the method 400 corresponding to the embodiments of this application, and each unit/module in the apparatus 600 and the above-mentioned other operations and/or functions are respectively used to implement corresponding processes in the method 400 and can achieve the same or equivalent technical effect. For brevity, no more details are described herein.

The DMRS port information indication apparatus according to this embodiment of this application may implement the processes in the method embodiments in FIG. 2 and FIG. 3, and achieve the same technical effect. To avoid repetition, details are not described herein again.

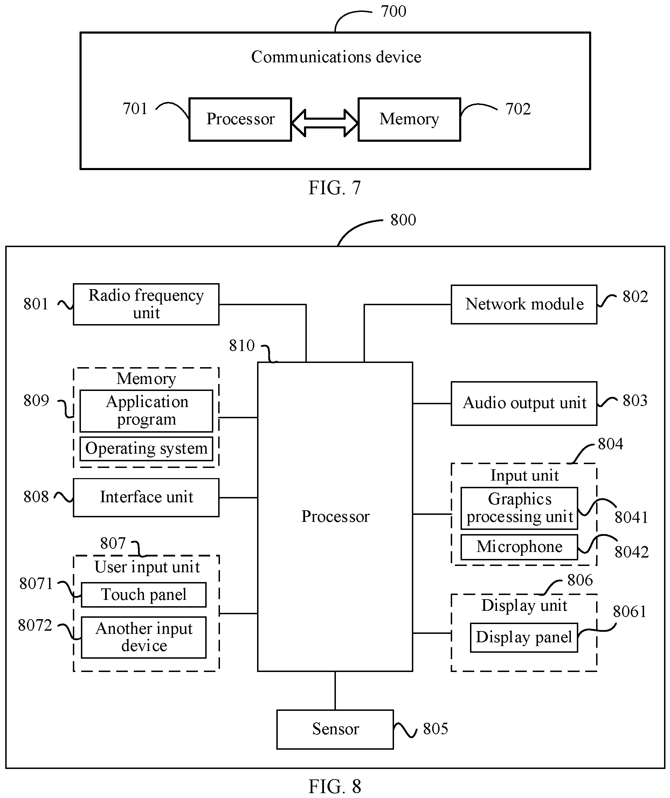

Optionally, as shown in FIG. 7, an embodiment of this application further provides a communications device 700, including a processor 701 and a memory 702. The memory 702 stores a program or an instruction executable on the processor 701. For example, when the communications device 700 is a terminal, when the program or instruction is executed by the processor 701, each step of the embodiment of the foregoing DMRS port information indication method is implemented, and the same technical effect can be achieved. When the communications device 700 is a network-side device, when the program or instruction is executed by the processor 701, each step of the embodiment of the foregoing DMRS port information indication method is implemented, and the same technical effect can be achieved. To avoid repetition, details are not described herein again.

An embodiment of this application further provides a terminal, including a processor and a communications interface, where the communications interface is configured to receive target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer; and send data or receive data according to the information of the DMRS port. This terminal embodiment corresponds to the above-mentioned method embodiment on the terminal side, and each implementation process and implementation manner of the above-mentioned method embodiment may be applied to this terminal embodiment, and can achieve the same technical effect. Specifically, FIG. 8 is a schematic structural diagram of hardware of a terminal implementing an embodiment of this application.

The terminal 800 includes but is not limited to: at least some of a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) supplying power to each component. The power supply may be logically connected to the processor 810 by using a power management system, so as to implement functions such as charging management, discharging management and power consumption management by using the power management system. The terminal structure shown in FIG. 8 does not constitute any limitation on the terminal, and the terminal may include more or fewer components than those shown in the figure, or combine some components, or have different component arrangements. Details are not described herein.

It should be understood that in the embodiments of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061, and the display panel 8061 may be configured in a form of a liquid crystal display, an organic light-emitting diode or the like. The user input unit 807 includes at least one of a touch panel 8071 and another input device 8072. The touch panel 8071 is also referred to as a touch screen. The touch panel 8071 may include two parts: a touch detection apparatus and a touch controller. The another input device 8072 may include, but is not limited to, a physical keyboard, function keys (such as a volume control key and a switch key), a trackball, a mouse, and a joystick. Details are not described herein.

In the embodiments of this application, after receiving downlink data from the network-side device, the radio frequency unit 801 may transmit the data to the processor 810 for processing. In addition, the radio frequency unit 801 may send uplink data to the network-side device. Generally, the radio frequency unit 801 includes, but is not limited to, an antenna, an amplifier, a transceiver, a coupler, a low noise amplifier, a duplexer, and the like.

The memory 809 may be configured to store software programs and various pieces of data. The memory 809 may mainly include a first storage area storing a program or an instruction and a second storage area storing data, where the first storage area may store an operating system, an application program or an instruction required by at least one function (such as a sound playback function or an image display function) and the like. Besides, the memory 809 may include a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 809 described in the embodiments of this application is intended to include but is not limited to these and any other suitable types of memories.

The processor 810 may include one or more processing units. Optionally, the processor 810 may integrate an application processor and a modem processor, where the application processor mainly processes an operating system, a user interface, an application program, and the like, and the modem processor mainly processes wireless communication signals, such as a baseband processor. It may be understood that the modem processor may alternatively not be integrated into the processor 810.

The radio frequency unit 801 may be configured to receive target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer; and send data or receive data according to the information of the DMRS port.

In this embodiment of this application, the target value item of the X value items in the target indication table is indicated, so that the first-type port and/or the second-type port can be indicated. In this way, the first-type port and the second-type port can be indicated and distinguished, and this helps increase a number of DMRS ports, increase a number of MU-MIMO users and a number of simultaneously transmitted data streams, and improve the performance of a communication system.

The terminal 800 provided in this embodiment of this application may further implement the processes of the embodiment of the foregoing DMRS port information indication method, and can achieve the same technical effect. To avoid repetition, details are not described herein again.

An embodiment of this application further provides a network-side device, including a processor and a communications interface. The communications interface is configured to send target indication information; where the target indication information is used to indicate a target value item of X value items in a target indication table, the target value item corresponds to information of a DMRS port used by the terminal, the DMRS port used by the terminal includes a first-type port and/or a second-type port, and X is a positive integer. This embodiment of the network-side device corresponds to the above-mentioned method embodiment on the network-side device, and each implementation process and implementation manner of the above-mentioned method embodiment may be applied to this embodiment of the network-side device, and can achieve the same technical effect.

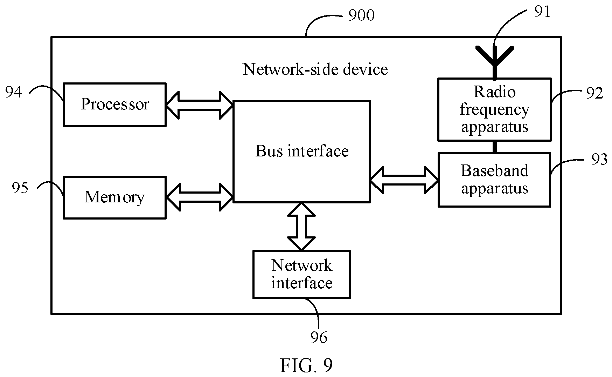

Specifically, an embodiment of this application further provides a network-side device. As shown in FIG. 9, the network-side device 900 includes: an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91, and sends the received information to the baseband apparatus 93 for processing. In a downlink direction, the baseband apparatus 93 processes information to be sent and sends the information to the radio frequency apparatus 92, and the radio frequency apparatus 92 processes the received information and then sends the information through the antenna 91.

The method performed by the network-side device in the foregoing embodiment may be implemented in the baseband apparatus 93. The baseband apparatus 93 includes a baseband processor.

The baseband apparatus 93 may include, for example, at least one baseband board, and a plurality of chips are arranged on the baseband board. As shown in FIG. 9, one of the chips is, for example, the baseband processor, and is connected to the memory 95 through a bus interface, to invoke a program in the memory 95, so as to perform the operations of the network device shown in the foregoing method embodiment.

The network-side device may further include a network interface 96, and the interface is, for example, a common public radio interface (common public radio interface, CPRI).

Specifically, the network-side device 900 in this embodiment of the present invention further includes: an instruction or a program stored on the memory 95 and executable on the processor 94, and the processor 94 invokes the instruction or program in the memory 95 to execute the method executed by the module shown in FIG. 6, and achieve the same technical effect. To avoid repetition, details are not described herein again.

An embodiment of this application further provides a readable storage medium. The readable storage medium stores a program or an instruction, and when the program or the instruction is executed by a processor, the various processes of the embodiment of the foregoing DMRS port information indication method are implemented and the same technical effects can be achieved. To avoid repetition, details are not described herein again.

The processor is a processor in the terminal in the above embodiments. The readable storage medium includes a computer-readable storage medium, such as a computer read-only memory ROM, a random access memory RAM, a magnetic disk, an optical disc, or the like.

An embodiment of this application further provides a chip, the chip includes a processor and a communications interface, the communications interface is coupled to the processor, and the processor is configured to run a program or an instruction to implement processes of the embodiment of the foregoing DMRS port information indication method and the same technical effects can be achieved. To avoid repetition, details are not described herein again.

It should be understood that the chip mentioned in the embodiments of this application may also be referred to as a system-level chip, a system chip, a chip system, or a system-on-chip.

An embodiment of this application further provides a computer program/program product, the computer program/program product is stored in a storage medium, and the computer program/program product is executed by at least one processor to implement processes of the embodiment of the foregoing DMRS port information indication method, and the same technical effects can be achieved. To avoid repetition, details are not described herein again.

An embodiment of this application further provides a DMRS port information indication system, including: a terminal and a network-side device, where the terminal may be configured to perform steps of the foregoing DMRS port information indication method, and the network-side device may be configured to perform steps of the foregoing DMRS port information indication method.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without more limitations, elements defined by the sentence "including one" do not exclude that there are still other same elements in the process, method, article, or apparatus. In addition, it should be pointed out that the scope of the methods and apparatuses in the embodiments of this application is not limited to performing functions in the order shown or discussed, and may also include performing functions in a substantially simultaneous manner or in a reverse order according to the functions involved, for example, the described methods may be performed in an order different from that described, and various steps may also be added, omitted, or combined. In addition, features described with reference to some examples may be combined in other examples.

According to the descriptions in the foregoing implementations, persons skilled in the art may clearly learn that the method according to the foregoing embodiment may be implemented by relying on software and a necessary common hardware platform or by using hardware. However, in many cases, the former is a better implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application

## Claims

1. A demodulation reference signal DMRS port information indication method, comprising:
receiving, by a terminal, target indication information; wherein the target indication information is used to indicate a target value item of X value items in a target indication table, the target value item corresponds to information of a DMRS port used by the terminal, the DMRS port used by the terminal comprises a first-type port and/or a second-type port, and X is a positive integer; and
sending, by the terminal, data or receiving data according to the information of the DMRS port.

2. The method according to claim 1, wherein the first-type port and the second-type port satisfy at least one of the following:
a port index of the second-type port is greater than or equal to a port index of the first-type port;
the second-type port and the first-type port belong to different code division multiplexing CDM groups;
the second-type port and the first-type port correspond to different frequency division-orthogonal cover code FD-OCC sequences; and
the second-type port and the first-type port correspond to different time division-orthogonal cover code TD-OCC sequences.

3. The method according to claim 1, wherein the target indication table comprises one of the following:
a first indication table, wherein X value items in the first indication table correspond to information of the first-type port;
a second indication table, wherein N of X value items in the second indication table correspond to information of the second-type port, X-N value items correspond to information of the first-type port and the second-type port, and N is a positive integer and N is less than X;
a third indication table, wherein M of X value items in the third indication table correspond to information of the first-type port, P value items correspond to information of the second-type port, X-M-P value items correspond to information of the first-type port and the second-type port, M and P are positive integers, and X is greater than a sum of M and P; and
a fourth indication table, wherein X value items in the fourth indication table correspond to information of the first-type port and the second-type port.

4. The method according to claim 3, wherein the method further comprises: receiving, by the terminal, first configuration information, wherein the first configuration information is used to indicate the target indication table used by the terminal, or to instruct the terminal to switch the target indication table.

5. The method according to claim 4, wherein switching the target indication table comprises one of the following:
switching between the first indication table and the second indication table;
switching between the first indication table and the third indication table; and
switching between the first indication table and the fourth indication table.

6. The method according to claim 3, wherein the method further comprises: reporting, by the terminal, first capability information, wherein the first capability information is used to indicate whether the terminal supports the second-type port.

7. The method according to claim 6, wherein
in a case that the terminal does not support the second-type port, the terminal only supports being configured with the first indication table; and
in a case that the terminal supports the second-type port, the terminal supports being configured with at least one of the following: the first indication table, the second indication table, the third indication table, and the fourth indication table.

8. The method according to claim 1 or 3, wherein the method further comprises: determining, by the terminal based on one of the following, despreading hypothesis corresponding to channel estimation of the DMRS port:
first configuration information, wherein the first configuration information is used to indicate the target indication table used by the terminal, or to instruct the terminal to switch the target indication table, and there is a correspondence between the first configuration information and the despreading hypothesis;
second configuration information, wherein the second configuration information comprises a scrambling code identifier ID of a DMRS, and there is a correspondence between the scrambling code ID and the despreading hypothesis;
third configuration information, wherein there is a correspondence between the third configuration information and the despreading hypothesis;
despreading indication information, wherein the despreading indication information comprises information corresponding to a specific indication field in downlink control information DCI, and there is a correspondence between the information corresponding to the specific indication field and the despreading hypothesis;
a value corresponding to a value item in the target indication table, wherein there is a correspondence between a value corresponding to the target value item and the despreading hypothesis;
information of the DMRS port corresponding to a value item in the target indication table, wherein there is a correspondence between the information of the DMRS port and the despreading hypothesis;
a despreading hypothesis identifier in the target indication table, wherein there is a correspondence between the despreading hypothesis identifier and the despreading hypothesis;
time domain resource allocation information, wherein the time domain resource allocation information is used to determine time domain resource allocation of the data, and there is a correspondence between the time domain resource allocation information and the despreading hypothesis; and
a default rule, applied to the DRMS port corresponding to all or some of value items in the target indication table.

9. The method according to claim 8, wherein the despreading hypothesis comprises at least one of the following:
a first despreading hypothesis, comprising that the terminal performs channel estimation based on an FD-OCC sequence with a length as 2; and
a second despreading hypothesis, comprising that the terminal performs channel estimation based on an FD-OCC sequence with a length as 4.

10. A DMRS port information indication method, comprising:
sending, by a network-side device, target indication information; wherein the target indication information is used to indicate a target value item of X value items in a target indication table, the target value item corresponds to information of a DMRS port used by the terminal, the DMRS port used by the terminal comprises a first-type port and/or a second-type port, and X is a positive integer.

11. The method according to claim 10, wherein the first-type port and the second-type port satisfy at least one of the following:
a port index of the second-type port is greater than or equal to a port index of the first-type port;
the second-type port and the first-type port belong to different CDM groups;
the second-type port and the first-type port correspond to different FD-OCC sequences; and
the second-type port and the first-type port correspond to different TD-OCC sequences.

12. The method according to claim 10, wherein the target indication table comprises one of the following:
a first indication table, wherein X value items in the first indication table correspond to information of the first-type port;
a second indication table, wherein N of X value items in the second indication table correspond to information of the second-type port, X-N value items correspond to information of the first-type port and the second-type port, and N is a positive integer and N is less than X;
a third indication table, wherein M of X value items in the third indication table correspond to information of the first-type port, P value items correspond to information of the second-type port, X-M-P value items correspond to information of the first-type port and the second-type port, M and P are positive integers, and X is greater than a sum of M and P; and
a fourth indication table, wherein X value items in the fourth indication table correspond to information of the first-type port and the second-type port.

13. The method according to claim 12, wherein the method further comprises: sending, by the network-side device, first configuration information, wherein the first configuration information is used to indicate the target indication table used by the terminal, or to instruct the terminal to switch the target indication table.

14. The method according to claim 13, wherein the switching the target indication table comprises one of the following:
switching between the first indication table and the second indication table;
switching between the first indication table and the third indication table; and
switching between the first indication table and the fourth indication table.

15. The method according to claim 12, wherein the method further comprises: receiving, by the network-side device, first capability information, wherein the first capability information is used to indicate whether the terminal supports the second-type port.

16. The method according to claim 15, wherein
in a case that the terminal does not support the second-type port, the terminal only supports being configured with the first indication table; and
in a case that the terminal supports the second-type port, the terminal supports being configured with at least one of the following: the first indication table, the second indication table, the third indication table, and the fourth indication table.

17. A DMRS port information indication apparatus, comprising:
a communications module, configured to receive target indication information; wherein the target indication information is used to indicate a target value item of X value items in a target indication table, the target value item corresponds to information of a DMRS port used by the apparatus, the DMRS port used by the apparatus comprises a first-type port and/or a second-type port, and X is a positive integer; and
the communications module is further configured to send data or receive data according to the information of the DMRS port.

18. The apparatus according to claim 17, wherein the first-type port and the second-type port satisfy at least one of the following:
a port index of the second-type port is greater than or equal to a port index of the first-type port;
the second-type port and the first-type port belong to different code division multiplexing CDM groups;
the second-type port and the first-type port correspond to different FD-OCC sequences; and
the second-type port and the first-type port correspond to different TD-OCC sequences.

19. The apparatus according to claim 17, wherein the target indication table comprises one of the following:
a first indication table, wherein X value items in the first indication table correspond to information of the first-type port;
a second indication table, wherein N of X value items in the second indication table correspond to information of the second-type port, X-N value items correspond to information of the first-type port and the second-type port, and N is a positive integer and N is less than X;
a third indication table, wherein M of X value items in the third indication table correspond to information of the first-type port, P value items correspond to information of the second-type port, X-M-P value items correspond to information of the first-type port and the second-type port, M and P are positive integers, and X is greater than a sum of M and P; and
a fourth indication table, wherein X value items in the fourth indication table correspond to information of the first-type port and the second-type port.

20. The apparatus according to claim 19, wherein the communications module is further configured to receive first configuration information, wherein the first configuration information is used to instruct the apparatus to use the target indication table, or to instruct the apparatus to switch the target indication table.

21. The apparatus according to claim 20, wherein the switching the target indication table comprises one of the following:
switching between the first indication table and the second indication table;
switching between the first indication table and the third indication table; and
switching between the first indication table and the fourth indication table.

22. The apparatus according to claim 19, wherein the communications module is further configured to report first capability information, wherein the first capability information is used to indicate whether the apparatus supports the second-type port.

23. The apparatus according to claim 22, wherein
in a case that the apparatus does not support the second-type port, the apparatus only supports being configured with the first indication table; and
in a case that the apparatus supports the second-type port, the apparatus supports being configured with at least one of the following: the first indication table, the second indication table, the third indication table, and the fourth indication table.

24. The apparatus according to claim 17 or 19, wherein the apparatus further comprises a processing module, configured to determine, based on one of the following, a despreading hypothesis corresponding to channel estimation of the DMRS port:
first configuration information, wherein the first configuration information is used to indicate the target indication table used by the terminal, or to instruct the terminal to switch the target indication table, and there is a correspondence between the first configuration information and the despreading hypothesis;
second configuration information, wherein the second configuration information comprises a scrambling code identifier ID of a DMRS, and there is a correspondence between the scrambling code ID and the despreading hypothesis;
third configuration information, wherein there is a correspondence between the third configuration information and the despreading hypothesis;
despreading indication information, wherein the despreading indication information comprises information corresponding to a specific indication field in downlink control information DCI, and there is a correspondence between the information corresponding to the specific indication field and the despreading hypothesis;
a value corresponding to a value item in the target indication table, wherein there is a correspondence between a value corresponding to the target value item and the despreading hypothesis;
information of the DMRS port corresponding to a value item in the target indication table, wherein there is a correspondence between the information of the DMRS port and the despreading hypothesis;
a despreading hypothesis identifier in the target indication table, wherein there is a correspondence between the despreading hypothesis identifier and the despreading hypothesis;
time domain resource allocation information, wherein the time domain resource allocation information is used to determine time domain resource allocation of the data, and there is a correspondence between the time domain resource allocation information and the despreading hypothesis; and
a default rule, applied to the DRMS port corresponding to all or some of value items in the target indication table.

25. The apparatus according to claim 24, wherein the despreading hypothesis comprises at least one of the following:
a first despreading hypothesis, comprising that the apparatus performs channel estimation based on an FD-OCC sequence with a length as 2; and
a second despreading hypothesis, comprising that the apparatus performs channel estimation based on an FD-OCC sequence with a length as 4.

26. A DMRS port information indication apparatus, comprising:
a communications module, configured to send target indication information; wherein the target indication information is used to indicate a target value item of X value items in a target indication table, the target value item corresponds to information of a DMRS port used by the terminal, the DMRS port used by the terminal comprises a first-type port and/or a second-type port, and X is a positive integer.

27. The apparatus according to claim 26, wherein the first-type port and the second-type port satisfy at least one of the following:
a port index of the second-type port is greater than or equal to a port index of the first-type port;
the second-type port and the first-type port belong to different CDM groups;
the second-type port and the first-type port correspond to different FD-OCC sequences; and
the second-type port and the first-type port correspond to different TD-OCC sequences.

28. The apparatus according to claim 26, wherein the target indication table comprises one of the following:
a first indication table, wherein X value items in the first indication table correspond to information of the first-type port;
a second indication table, wherein N of X value items in the second indication table correspond to information of the second-type port, X-N value items correspond to information of the first-type port and the second-type port, and N is a positive integer and N is less than X;
a third indication table, wherein M of X value items in the third indication table correspond to information of the first-type port, P value items correspond to information of the second-type port, X-M-P value items correspond to information of the first-type port and the second-type port, M and P are positive integers, and X is greater than a sum of M and P; and
a fourth indication table, wherein X value items in the fourth indication table correspond to information of the first-type port and the second-type port.

29. The apparatus according to claim 28, wherein the communications module is further configured to send first configuration information, wherein the first configuration information is used to indicate the target indication table used by the terminal, or to instruct the terminal to switch the target indication table.

30. The apparatus according to claim 29, wherein the switching the target indication table comprises one of the following:
switching between the first indication table and the second indication table;
switching between the first indication table and the third indication table; and
switching between the first indication table and the fourth indication table.

31. The apparatus according to claim 28, wherein the communications module is further configured to receive first capability information, wherein the first capability information is used to indicate whether the terminal supports the second-type port.

32. The apparatus according to claim 31, wherein
in a case that the terminal does not support the second-type port, the terminal only supports being configured with the first indication table; and
in a case that the terminal supports the second-type port, the terminal supports being configured with at least one of the following: the first indication table, the second indication table, the third indication table, and the fourth indication table.

33. A terminal, comprising a processor and a memory, wherein the memory stores a program or an instruction executable on the processor, and when the program or instruction is executed by the processor, the steps of the method according to any one of claims 1 to 9 are implemented.

34. A network-side device, comprising a processor and a memory, wherein the memory stores a program or an instruction executable on the processor, and when the program or instruction is executed by the processor, the steps of the method according to any one of claims 10 to 16 are implemented.

35. A readable storage medium, storing a program or an instruction, wherein when the program or instruction is executed by a processor, the steps of the method according to any one of claims 1 to 9 are implemented, or the steps of the method according to any one of claims 10 to 16 are implemented.
